# EUROPÄISCHE PATENTSCHRIFT

(11) **EP 0 688 542 B1**
(45) Veröffentlichungstag und Bekanntmachung des Hinweises auf die Patenterteilung: **29.12.1999**
(21) Anmeldenummer: 95201524.6
(22) Anmeldetag: 09.06.1995
(51) Int. Cl.: A61C 17/02, A61H 13/00

(54) **Munddusche mit einem Handstück und Mundstück für eine Munddusche**
Oral douche with a hand-piece and mouth-piece for an oral douche
Douche buccale avec pièce à main et canule pour une douche buccale

(30) Priorität: 21.06.1994 AT 122294
(43) Veröffentlichungstag der Anmeldung: 27.12.1995
(73) Patentinhaber: Koninklijke Philips Electronics N.V., 5621 BA Eindhoven (NL)
(72) Erfinder: Häfele, Peter, NL-5656 AA Eindhoven (NL); Poganitsch, Ernst, NL-5656 AA Eindhoven (NL)
(74) Vertreter: Bos, Kornelis Sjoerd

(56) Entgegenhaltungen:
- CH-A- 665 347
- DE-A- 3 526 579

## Beschreibung

Die Erfindung bezieht sich auf eine Munddusche mit einem Handstück und mit mindestens einem mit dem Handstück verbindbaren Mundstück, das einen Rohrteil mit einem Fluidkanal und einen im Bereich des freien Endes des Rohrteiles an demselben festgehaltenen, gegenüber dem Rohrteil um eine Drehachse zwischen einer Mittenstrahlposition und einer Randstrahlposition verdrehbaren Düsenkopf aufweist, der mindestens eine Mittenstrahldüse und mehrere Randstrahldüsen aufweist, wobei zwischen dem Rohrteil und dem Düsenkopf eine ringförmige Dichtung zur Verhinderung von unerwünschtem Fluidaustritt zur Außenseite des Mundstückes vorgesehen ist.

Weiters bezieht sich die Erfindung auf ein Mundstück für eine Munddusche, welches Mundstück einen Rohrteil mit einem Fluidkanal und einen im Bereich des freien Endes des Rohrteiles an demselben festgehaltenen, gegenüber dem Rohrteil um eine Drehachse zwischen einer Mittenstrahlposition und einer Randstrahlposition verdrehbaren Düsenkopf aufweist, der mindestens eine Mittenstrahldüse und mehrere Randstrahldüsen aufweist, wobei zwischen dem Rohrteil und dem Düsenkopf eine ringförmige Dichtung zur Verhinderung von unerwünschtem Fluidaustritt zur Außenseite des Mundstückes vorgesehen ist.

Eine Munddusche gemäß der vorstehend im ersten Absatz angeführten Gattung und ein Mundstück gemäß der vorstehend im zweiten Absatz angeführten Gattung sind beispielsweise aus der DE-A1-35 26 579 bekannt. Bei der bekannten Munddusche und bei dem bekannten Mundstück weist der Rohrteil einen verbreiterten Endbereich auf, wobei in diesen verbreiterten Endbereich ein Zwischenstück des Rohrteiles mit einer Mehrzahl von Durchflußkanälen eingesetzt ist und wobei in dieses Zwischenstück des Rohrteiles weiters ein Strahleinsatz des Rohrteiles aufgenommen ist, der mit Durchtrittslöchern zum Zuführen von Fluid, nämlich von Wasser, zu den Randstrahldüsen im Düsenkopf und mit einem Durchtrittskanal zum Zuführen von Fluid, nämlich von Wasser, zu einer Mittenstrahldüse im Düsenkopf versehen ist.

Der Strahleinsatz des Rohrteiles liegt hiebei mit einer quer zur Drehachse des Düsenkopfes verlaufenden Fläche einfach an einer quer zur Drehachse des Düsenkopfes verlaufenden Fläche des Düsenkopfes an, wodurch es bei in seiner Mittenstrahlposition befindlichem Düsenkopf zu einem unerwünschten Austritt von Wasser durch die Randstrahldüsen und folglich zu einem Mengenverlust und Druckverlust bei dem durch die Mittenstrahldüse austretenden Wasserstrahl kommt. Außer dieser unerwünschten Eigenschaft der bekannten Munddusche und des bekannten Mundstückes ist auch noch die relativ komplizierte und aus relativ vielen Einzelteilen bestehende Ausbildung des bekannten Mundstückes der bekannten Munddusche als ungünstig zu erwähnen.

Die Erfindung hat sich zur Aufgabe gestellt, die vorstehend angeführten Schwierigkeiten zu vermeiden und eine Munddusche der eingangs im ersten Absatz angeführten Gattung und ein Mundstück der eingangs im zweiten Absatz angeführten Gattung mit einfachen Mitteln und auf einfache Weise derart zu verbessern, daß aus keinen der Düsen des Düsenkopfes ein unerwünschter Austritt von Fluid erfolgen kann und daß der Düsenkopf eine besonders einfache und betriebssichere Ausbildung aufweist.

Hiefür ist eine Munddusche der eingangs im ersten Absatz angeführten Gattung erfindungsgemäß dadurch gekennzeichnet, daß der Rohrteil einen einzigen mit dem Fluidkanal des Rohrteiles verbundenen, zur Drehachse des Düsenkopf es exzentrisch gelegenen Rohrteilauslaß aufweist und daß der Düsenkopf nur zwei zur Drehachse des Düsenkopfes exzentrisch gelegene Düsenkopfeinlässe aufweist, die mittels einer zwischen dem Rohrteil und dem Düsenkopf wirksamen zweiten ringförmigen Dichtung gegenüber einander abgedichtet sind und von denen ein erster Düsenkopfeinlaß in der Mittenstrahlposition des Düsenkopfes und der zweite Düsenkopfeinlaß in der Randstrahlposition des Düsenkopfes mit dem Rohrteilauslaß in fluidleitender Verbindung steht und der erste Düsenkopfeinlaß mit der mindestens einen Mittenstrahldüse des Düsenkopfes und der zweite Düsenkopfeinlaß mit den Randstrahldüsen des Düsenkopfes fluidleitend verbunden ist.

Auf diese Weise ist mit sehr einfachen Mitteln erreicht, daß die Fluidversorgung der mindestens einen Mittenstrahldüse und die Fluidversorgung der Randstrahldüsen des Düsenkopfes genau voneinander getrennt sind, so daß aus keinen der Düsen des Düsenkopfes ein unerwünschter Austritt von Fluid möglich ist. Weiters ist auf diese Weise eine besonders einfache Ausbildung des Mundstückes einer erfindungsgemäßen Munddusche erreicht.

Eine besonders vorteilhafte Ausbildung einer erfindungsgemäßen Munddusche ist dadurch gekennzeichnet, daß die zweite Dichtung zwischen parallel zur Drehachse des Düsenkopfes sich erstreckenden Flächen des Rohrteiles und des Düsenkopfes angeordnet ist und die zweite Dichtung mit ihrer Ringebene gegenüber der Drehachse des Düsenkopfes geneigt verlaufend angeordnet ist.

Dies ist im Hinblick auf eine möglichst kleine Ausbildung des Düsenkopfes des Mundstückes in Querrichtung zur Drehachse des Düsenkopfes vorteilhaft. Weiters ist dies vorteilhaft, weil die durch die zwischen den Flächen des Rohrteiles und des Düsenkopfes wirksame zweite ringförmige Dichtung verursachten und auch die durch den Fluiddruck verursachten Kräfte zwischen dem Rohrteil und dem Düsenkopf von den koaxial zur Drehachse des Düsenkopfes verlaufenden Bereichen des Rohrteiles und des Düsenkopfes aufgenommen werden.

Ein Mundstück der eingangs im zweiten Absatz angeführten Gattung ist erfindungsgemäß dadurch gekennzeichnet, daß der Rohrteil einen einzigen mit dem Fluidkanal des Rohrteiles verbundenen, zur Drehachse des Düsenkopfes exzentrisch gelegenen Rohrteilauslaß aufweist und der Düsenkopf nur zwei zur Drehachse des Düsenkopfes exzentrisch gelegene Düsenkopfeinlässe aufweist, die mittels einer zwischen dem Rohrteil und dem Düsenkopf wirksamen zweiten ringförmigen Dichtung gegenüber einander abgedichtet sind und von denen ein erster Düsenkopfeinlaß in der Mittenstrahlposition des Düsenkopfes und der zweite Düsenkopfeinlaß in der Randstrahlposition des Düsenkopfes mit dem Rohrteilauslaß in fluidleitender Verbindung steht und der erste Düsenkopfeinlaß mit der mindestens einen Mittenstrahldüse des Düsenkopfes und der zweite Düsenkopfeinlaß mit den Randstrahldüsen des Düsenkopfes fluidleitend verbunden ist.

Auf diese Weise ist mit sehr einfachen Mitteln erreicht, daß die Fluidversorgung der mindestens einen Mittenstrahldüse und die Fluidversorgung der Randstrahldüsen des Düsenkopfes genau voneinander getrennt sind, so daß aus keinen der Düsen des Düsenkopfes ein unerwünschter Austritt von Fluid möglich ist. Weiters ist auf diese Weise eine besonders einfache Ausbildung des Mundstückes erreicht.

Eine besonders vorteilhafte Ausbildung eines erfindungsgemäßen Mundstückes ist dadurch gekennzeichnet, daß die zweite Dichtung zwischen parallel zur Drehachse des Düsenkopfes sich erstreckenden Flächen des Rohrteiles und des Düsenkopfes angeordnet ist und die zweite Dichtung mit ihrer Ringebene gegenüber der Drehachse des Düsenkopfes geneigt verlaufend angeordnet ist.

Dies ist im Hinblick auf eine möglichst kleine Ausbildung des Düsenkopfes des Mundstückes in Querrichtung zur Drehachse des Düsenkopfes vorteilhaft. Weiters ist dies vorteilhaft, weil die durch die zwischen den Flächen des Rohrteiles und des Düsenkopfes wirksame zweite ringförmige Dichtung verursachten Kräfte und die durch den Fluiddruck verursachten Kräfte zwischen dem Rohrteil und dem Düsenkopf von den koaxial zur Drehachse des Düsenkopfes verlaufenden Bereichen des Rohrteiles und des Düsenkopfes aufgenommen werden.

Die Erfindung wird im folgenden anhand von zwei in den Zeichnungen dargestellten Ausführungsbeispielen beschrieben, auf die die Erfindung aber nicht beschränkt sein soll.
Die Fig.1 zeigt schematisch in Schrägansicht eine Munddusche, die ein Grundgerät und ein mit dem Grundgerät über einen Schlauch verbundenes Griffstück aufweist, wobei das Grundgerät einen Behälter zum Aufnehmen von Mundstücken aufweist, van denen je eines auf das Griffstück aufsteckbar ist.
Die Fig.2 zeigt schematisch in Schrägansicht das Griffstück der Munddusche gemäß Fig.1, wobei auf das Griffstück ein Mundstück aufgesteckt ist, an dessen freiem Ende ein zwischen einer Mittenstrahlposition und einer Randstrahlposition verdrehbarer Düsenkopf festgehalten ist.
Die Fig.3 zeigt in einem Querschnitt das Ende des Mundstückes gemäß Fig.2 mit dem Düsenkopf, wobei sich der Düsenkopf in seiner Mittenstrahlposition befindet.
Die Fig.4 zeigt analog wie die Fig.3 das Ende des Mundstückes gemäß Fig.2 mit dem Düsenkopf, wobei sich der Düsenkopf in seiner Randstrahlposition befindet.
Die Fig.5 zeigt analog wie die Figuren 3 und 4 das Ende eines Mundstückes gemäß einem zweiten Ausführungsbeispiel der Erfindung mit einem Düsenkopf, wobei sich der Düsenkopf in seiner Mittenstrahlposition befindet.
Die Fig.6 zeigt analog wie die Figuren 3, 4 und 5 das Ende des Mundstückes gemäß Fig.5 mit dem Düsenkopf, wobei sich der Düsenkopf in seiner Randstrahlposition befindet.

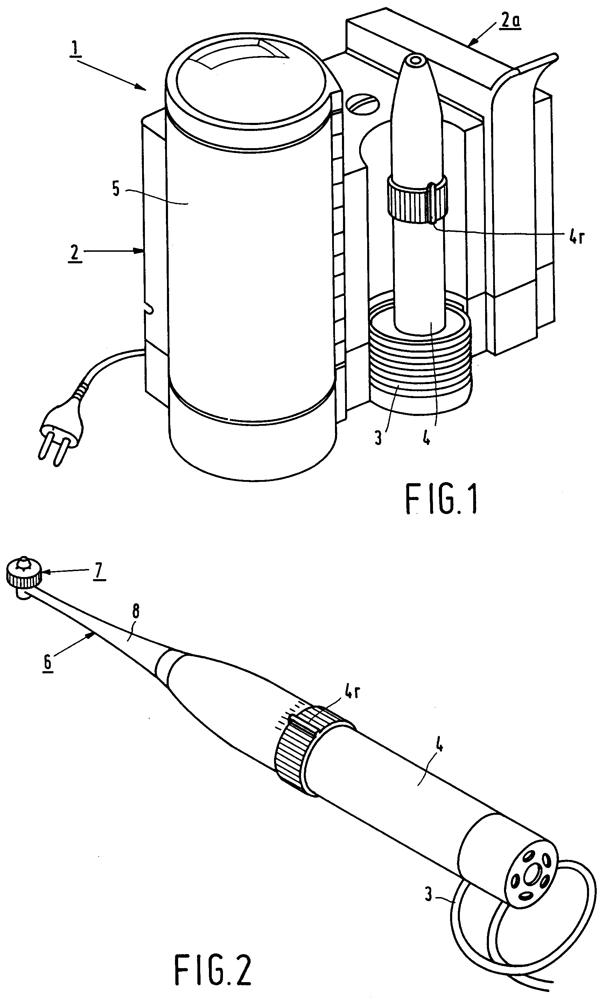

In der Fig.1 ist eine Munddusche 1 dargestellt, die ein Grundgerät 2 und ein mit dem Grundgerät 2 über einen flexiblen Schlauch 3 verbundenes Griffstück 4 aufweist. Auf das Grundgerät 2 ist ein Fluidbehälter 5 aufgesetzt, und in dem Grundgerät 2 ist eine motorisch angetriebene Pumpeinrichtung vorgesehen, mit der ein Fluid, beispielsweise Wasser, aus dem Fluidbehälter 5 über den Schlauch 3 zu dem Griffstück 4 gepumpt werden kann. Auf das Griffstück 4 sind verschiedene Mundstücke aufsetzbar, wie dies für ein Mundstück 6 in Fig.2 dargestellt ist. Das zum Griffstück 4 gepumpte Fluid wird dem Mundstück 6 zugeführt und über einen Düsenkopf 7 des Mundstückes 6 in Strahlform zum Reinigen von Zähnen und Zahnfleisch bzw. zum Massieren von Zahnfleisch abgegeben. Zum Einstellen einer gewünschten Fluidmenge ist an dem Griffstück 4 ein Einstellring 4r vorgesehen. Durch Verdrehen des Einstellringes 4r ist eine im Griffstück 6 vorgesehene Einrichtung zur Fluidmengenregelung verstellbar. In den Fluidbehälter 5 kann anstelle von reinem Wasser auch Wasser mit einem Zusatz oder auch ein anderes flüssiges Mund-bzw. Zahnpflegemittel eingefüllt werden. Zum Aufnehmen von verschiedenen Mundstücken 6 weist das Grundgerät 2 einen Behälter 2a auf, der in Fig.1 in seinem geschlossenen Zustand dargestellt ist.

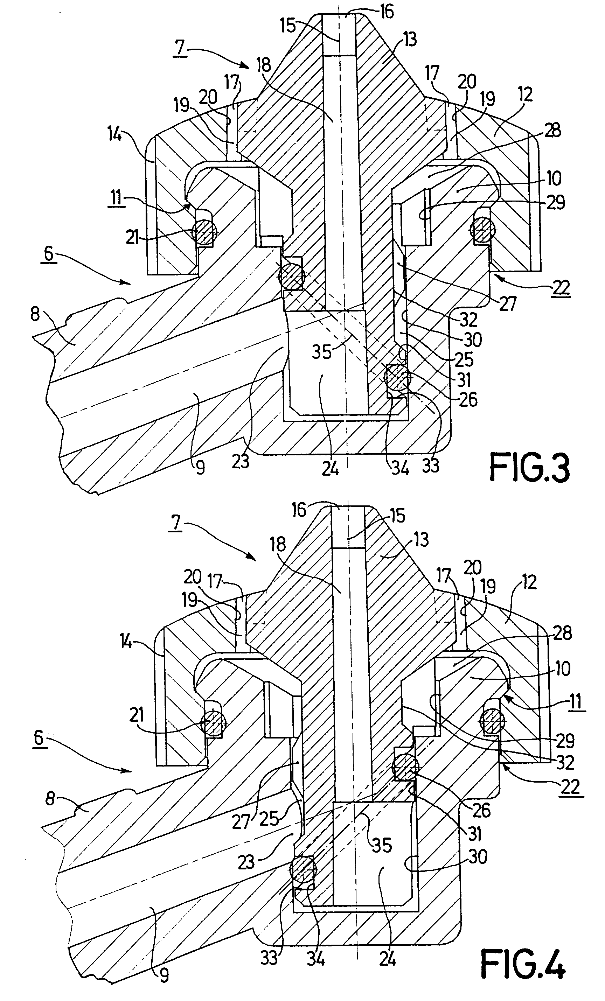

Wie aus den Figuren 2, 3 und 4 ersichtlich ist, weist das Mundstück 6 einen Rohrteil 8 mit einem Fluidkanal 9 auf. Weiters weist das Mundstück 6 den Düsenkopf 7 auf, der im Bereich des freien Endes 10 des Rohrteiles 8 an demselben verdrehbar festgehalten ist, und zwar mittels einer Rastverbindung 11. Der ebenso wie der Rohrteil 8 aus Kunststoff bestehende Düsenkopf 7 ist im vorliegenden Fall aus spritztechnischen Gründen zweiteilig ausgebildet; er könnte aber auch einteilig ausgebildet sein. Der Düsenkopf 7 besteht aus einem im wesentlichen hohlzylindrischen Aussenteil 12, in den ein Innenteil 13 gegenüber dem Aussenteil 12 unverdrehbar eingesetzt ist. Der Aussenteil 12 ist in seinem Umfangsbereich mit einer Rändelung 14 versehen, um ein Verdrehen des Düsenkopfes 7 gegenüber dem Rohrteil 8 zu erleichtern. Der Düsenkopf 7 ist gegenüber dem Rohrteil 8 um eine Drehachse 15 verdrehbar, und zwar um einen Winkelbereich von etwa 180° zwischen einer in Fig.3 dargestellten Mittenstrahlposition und einer in Fig. 4 dargestellten Randstrahlposition.

Der Düsenkopf 7 weist eine zur Drehachse 15 koaxial liegende Mittenstrahldüse 16 und mehrere bezüglich der Drehachse 15 exzentrisch liegende Randstrahldüsen 17 auf. Beispielsweise können acht solche Randstrahldüsen 17 gleichmäßig zueinander winkelversetzt vorgesehen sein. Die Mittenstrahldüse 16 liegt am Ende eines durch den Innenteil 13 führenden Mittenstrahlkanals 18 und die Randstrahldüsen 17 liegen an den Enden von Randstrahlkanälen 19, die durch im Umfangsbereich des Innenteiles 13 vorgesehene Rinnen gebildet sind und die von der Innenfläche 20 des Aussenteiles 12 begrenzt sind. Der Düsenkopf 7 könnte aber auch zwei oder drei- Mittenstrahldüsen aufweisen, die gegenüber der Drehachse 15 geringfügig exzentrisch liegen.

Zwischen dem Rohrteil 8 und dem Düsenkopf 7 ist eine erste ringförmige Dichtung 21 aus Gummi vorgesehen, um einen unerwünschten Wasseraustritt im Übergangsbereich 22 zwischen dem Rohrteil 8 und dem Düsenkopf 7 zur Außenseite des Mundstückes 6 zu verhindern.

Wie aus den Figuren 3 und 4 ersichtlich ist, weist der Rohrteil 8 des Mundstückes 6 einen einzigen Rohrteilauslaß 23 auf, der mit dem Fluidkanal 9 des Rohrteiles 8 verbunden ist und der zur Drehachse 15 des Düsenkopfes 7 exzentrisch gelegen ist. Der Düsenkopf 7 weist nur zwei Düsenkopfeinlässe 24 und 25 auf, die zur Drehachse 15 des Düsenkopfes 7 exzentrisch gelegen sind. Die beiden Düsenkopfeinlässe 24 und 25 sind mittels einer zwischen dem Rohrteil 8 und dem Düsenkopf 7 wirksamen zweiten ringförmigen Dichtung 26 gegenüber einander abgedichtet .

Von den beiden Düsenkopfeinlässen 24 und 25 steht ein erster Düsenkopfeinlaß 24 in der Mittenstrahlposition des Düsenkopfes 7 mit dem Rohrteilauslaß 23 in fluidleitender Verbindung, wie dies in Fig.3 dargestellt ist.

Der zweite Düsenkopfeinlaß 25 steht in der Randstrahlposition des Düsenkopfes 7 mit dem Rohrteilauslaß 23 in fluidleitender Verbindung, wie dies in Fig.4 dargestellt ist. Der erste Düsenkopfeinlaß 24 ist über den Mittenstrahlkanal 18 mit der Mittenstrahldüse 16 des Düsenkopfes 7 verbunden. Der zweite Düsenkopfeinlaß 25 ist über einen ersten im wesentlichen zylindrischen Kanalbereich 27, der zwischen dem freien Ende 10 des Rohrteiles 8 und dem Innenteil 13 des Düsenkopfes 7 liegt, und einen zweiten an den ersten Kanalbereich 27 anschließenden, im wesentlichen kegelstumpfförmigen Kanalbereich 28, der ebenso zwischen dem freien Ende 10 des Rohrteiles 8 und dem Innenteil 13 des Düsenkopfes 7 liegt, mit den Randstrahlkanälen 19 und folglich mit den Randstrahldüsen 17 des Düsenkopfes 7 fluidleitend verbunden.

Bei der Ausbildung des Rohrteiles 8 und des Düsenkopfes 7 gemäß den Figuren 3 und 4 weist das freie Ende 10 eine zur Drehachse 15 im wesentlichen koaxiale hohlzylindrische Ausbildung auf.

Im Inneren des hohlzylindrischen freien Endes 10 ist der Rohrteil 8 von zwei sich parallel zur Drehachse 15 des Düsenkopfes 7 erstreckenden Zylinderflächen 29 und 30 begrenzt. Der in das Innere des hohlzylindrischen freien Endes 10 hineinragende Abschnitt des Innenteiles 13 ist im wesentlichen von zwei sich parallel zur Drehachse 15 des Düsenkopfes 7 erstreckenden Zylinderflächen 31 und 32 begrenzt. Im Bereich der Zylinderfläche 31, die im wesentlichen zwischen zwei gegenüber der Drehachse 15 des Düsenkopfes 7 geneigt verlaufenden Ebenen liegt, weist der Innenteil 13 eine Nut 33 auf, die bodenseitig von einer ebenfalls parallel zu der Drehachse 15 des Düsenkopfes 7 sich erstreckenden Zylinderfläche 34 begrenzt ist. In diese Nut 33 ist die zweite ringförmige Dichtung 26 eingesetzt. Auf diese Weise ist die zweite ringförmige Dichtung 26 zwischen sich parallel zur Drehachse 15 des Düsenkopfes 7 erstreckenden Flächen 30 und 34 des Rohrteiles 8 und des Düsenkopfes 7 angeordnet.

Aufgrund der Ausbildung der Zylinderfläche 31 bzw. der Nut 33 ist die zweite ringförmige Dichtung 26 mit ihrer Ringebene 35 gegenüber der Drehachse 15 des Düsenkopfes 7 geneigt angeordnet.

Bei der vorstehend beschriebenen Munddusche gemäß den Figuren 1 bis 4 ist mit sehr einfachen Mitteln erreicht, daß die Fluidversorgung der Mittenstrahldüse und die Fluidversorgung der Randstrahldüsen des Düsenkopfes genau voneinander getrennt sind, so daß in Abhängigkeit von der Drehposition des Düsenkopfes gegenüber dem Rohrteil des Mundstückes entweder nur die Mittenstrahldüse oder nur die Randstrahldüsen mit Fluid versorgt werden und hiebei aus keinen der jeweils nicht in Betrieb gesetzten Düsen ein unerwünschter Austritt von Fluid möglich ist.

Weiters zeichnet sich die vorstehend beschriebene Munddusche durch eine besonders einfache Ausbildung des Mundstückes ünd des Düsenkopfes aus, wobei der Düsenkopf aufgrund der hohlzylindrischen Ausbildung des freien Endes des Rohrteiles in radialen Richtungen vorteilhaft kleine Abmessungen aufweist. Durch die hohlzylindrische Ausbildung des freien Endes des Rohrteiles und die hiezu angepaßte Ausbildung des Düsenkopfes ist vorteilhafterweise weiters erreicht, daß die durch die zwischen den Flächen des Rohrteiles und des Düsenkopfes wirksame zweite Ringdichtung verursachten und auch die durch den Fluiddruck verursachten Kräfte zwischen dem Rohrteil und dem Düsenkopf von den koaxial zur Drehachse des Düsenkopfes verlaufenden Bereichen des Rohrteiles und des Düsenkopfes aufgenommen werden, so daß die Rasteinrichtung zum Festhalten des Düsenkopfes am Düsenrohr durch diese Kräfte praktisch nicht belastet wird.

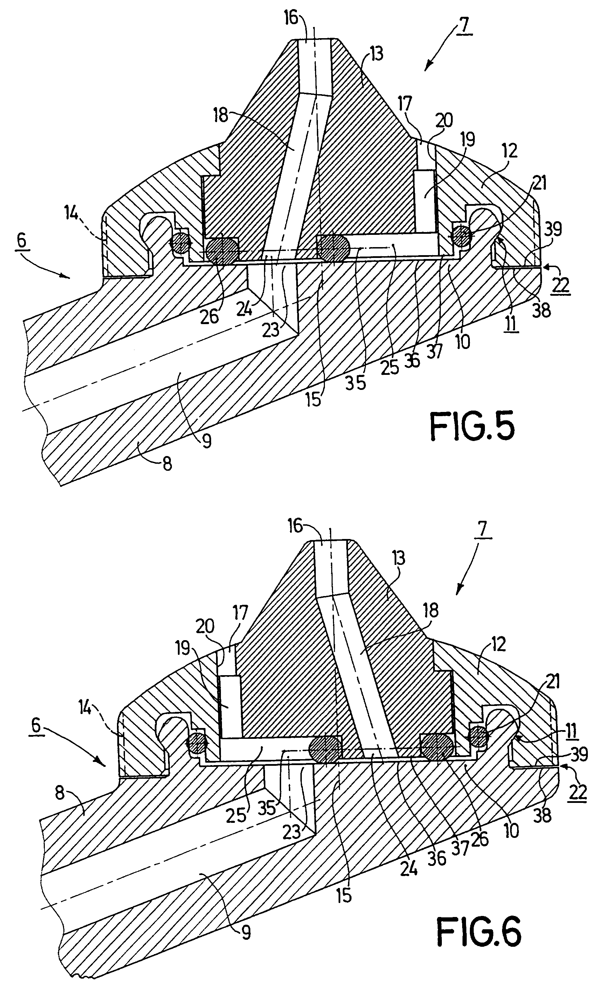

In den Figuren 5 und 6 ist ein Teil des Mundstückes 6 einer Munddusche gemäß einem zweiten Ausführungsbeispiel der Erfindung dargestellt. Bei diesem Mundstück 6 grenzen der Rohrteil 8 mit seinem freien Ende 10 und der Düsenkopf 7 im wesentlichen mit senkrecht zur Drehachse 15 des Düsenkopfes 7 sich erstreckenden Flächen 36, 37 und 38, 39 aneinander. Die zweite ringförmige Dichtung 26 ist zwischen den beiden sich senkrecht zur Drehachse 15 erstreckenden Flächen 36 und 37 des Rohrteiles 8 und des Düsenkopfes 7 angeordnet. In diesem Fall liegt die zweite ringförmige Dichtung 26 mit ihrer Ringebene 35 senkrecht zur Drehachse 15 des Düsenkopfes 7. Die zweite ringförmige Dichtung 26 dichtet auch bei diesem Ausführungsbeispiel zwei zu der Drehachse 15 des Düsenkopfes 7 exzentrisch gelegene Düsenkopfeinlässe 24 und 25 gegenüber einander einwandfrei ab, so daß der einzige Rohrteilauslaß 23 des Rohrteiles 8 je nach Drehposition des Düsenkopfes 7 entweder nur mit dem ersten Düsenkopfeinlaß 24 oder nur mit dem zweiten Düsenkopfeinlaß 25 in fluidleitender Verbindung steht.

Auch bei der Munddusche gemäß den Figuren 5 und 6 ist mit sehr einfachen Mitteln erreicht, daß die Fluidversorgung der Mittenstrahldüse und die Fluidversorgung der Randstrahldüsen des Düsenkopfes genau voneinander getrennt sind, so daß ein unerwünschter Austritt von Fluid aus den jeweils nicht in Betrieb gesetzten Düsen des Düsenkopfes verhindert ist. Auch bei der Munddusche gemaß den Figuren 5 und 6 zeichnet sich das Mundstück bzw. der Düsenkopf desselben durch eine besonders einfache Ausbildung aus.

## Patentansprüche

1. Munddusche (1) mit einem Handstück (4) und mit mindestens einem mit dem Handstück (4) verbindbaren Mundstück (6) , das einen Rohrteil (8) mit einem Fluidkanal (9) Und einen im Bereich des freien Endes (10) des Rohrteiles (8) an demselben festgehaltenen, gegenüber dem Rohrteil (8) um eine Drehachse (15) zwischen einer Mittenstrahlposition und einer Randstrahlposition verdrehbaren Düsenkopf (7) aufweist, der mindestens eine Mittenstrahldüse (16) und mehrere Randstrahldüsen (17) aufweist, wobei zwischen dem Rohrteil (8) und dem Düsenkopf (7) eine ringförmige Dichtung (21) zur Verhinderung von unerwünschtem Fluidaustritt zur Außenseite des Mundstückes (6) vorgesehen ist, dadurch gekennzeichnet, daß der Rohrteil (8) einen einzigen mit dem Fluidkanal (9) des Rohrteiles (8) verbundenen, zur Drehachse (15) des Düsenkopfes (7) exzentrisch gelegenen Rohrteilauslaß (23) aufweist und daß der Düsenkopf (7) nur zwei zur Drehachse (15) des Düsenkopfes (7) exzentrisch gelegene Düsenkopfeinlässe (24, 25) aufweist, die mittels einer zwischen dem Rohrteil (8) und dem Düsenkopf (7) wirksamen zweiten ringförmigen Dichtung (26) gegenüber einander abgedichtet sind und von denen ein erster Düsenkopfeinlaß (24) in der Mittenstrahlposition des Düsenkopfes (7) und der zweite Düsenkopfeinlaß (25) in der Randstrahlposition des Düsenkopfes (7) mit dem Rohrteilauslaß (23) in fluidleitender Verbindung steht und der erste Düsenkopfeinlaß (24) mit der mindestens einen Mittenstrahldüse (16) des Düsenkopfes (7) und der zweite Düsenkopfeinlaß (25) mit den Randstrahldüsen (17) des Düsenkopfes (7) fluidleitend verbunden ist.

2. Munddusche nach Anspruch 1, dadurch gekennzeichnet, daß die zweite Dichtung (26) zwischen parallel zur Drehachse (15) des Düsenkopfes (7) sich erstreckenden Flächen (30, 34) des Rohrteiles (8) und des Düsenkopfes (7) angeordnet ist und daß die zweite Dichtung (26) mit ihrer Ringebene (35) gegenüber der Drehachse (15) des Düserkopfes (7) geneigt verlaufend angeordnet ist.

3. Mundstück (6) für eine Munddusche (1), welches Mundstück (6) einen Rohrteil (8) mit einem Fluidkanal (9) und einen im Bereich des freien Endes (10) des Rohrteiles (8) an demselben festgehaltenen, gegenüber dem Rohrteil (8) um eine Drehachse (15) zwischen einer Mittenstrahlposition und einer Randstrahlposition verdrehbaren Düsenkopf (7) aufweist, der mindestens eine Mittenstrahldüse (16) und mehrere Randstrahldüsen (17) aufweist, wobei zwischen dem Rohrteil (8) und dem Düsenkopf (7) eine ringförmige Dichtung (21) zur Verhinderung von unerwünschtem Fluidaustritt zur Außenseite des Mundstückes (6) vorgesehen ist, dadurch gekennzeichnet, daß der Rohrteil (8) einen einzigen mit dem Fluidkanal (9) des Rohrteiles (8) verbundenen, zur Drehachse (15) des Düsenkopfes (7) exzentrisch gelegenen Rohrteilauslaß (23) aufweist und daß der Düsenkopf (7) nur zwei zur Drehachse (15) des Düsenkopfes (7) exzentrisch gelegene Düsenkopfeinlässe (24, 25) aufweist, die mittels einer zwischen dem Rohrteil (8) und dem Düsenkopf (7) wirksamen zweiten ringförmigen Dichtung (26) gegenüber einander abgedichtet sind und von denen ein erster Düsenkopfeinlaß (24) in der Mittenstrahlposition des Düsenkopfes (7) und der zweite Düsenkopfeinlaß (25) in der Randstrahlposition des Düsenkopfes (7) mit dem Rohrteilauslaß (23) in fluidleitender Verbindung steht und der erste Düsenkopfeinlaß (24) mit der mindestens einen Mittenstrahldüse (16) des Düsenkopfes (7) und der zweite Düsenkopfeinlaß (25) mit den Randstrahldüsen (17) des Düsenkopfes (7) fluidleitend verbunden ist.

4. Mundstück (6) nach Anspruch 3, dadurch gekennzeichnet, daß die zweite Dichtung (26) zwischen parallel zur Drehachse (15) des Düsenkopfes (7) sich erstreckenden Flächen (30, 34) des Rohrteiles (8) und des Düsenkopfes (7) angeordnet ist und daß die zweite Dichtung (26) mit ihrer Ringebene (35) gegenüber der Drehachse (15) des Düsenkopfes (7) geneigt verlaufend angeordnet ist.

## Claims

1. A dental-jet device (1) comprising a grip member (4) and at least one mouthpiece (6), which mouthpiece is connectable to the grip member (4) and comprises a tubular part (8) having a fluid channel (9) and a nozzle head (7) mounted on the tubular part (8) at the location of the free end (10) of said tubular part so as to be rotatable with respect to the tubular part (8) about an axis of rotation (15) between a central-jet position and a peripheral-jet position, which nozzle head has at least one central jet orifice (16) and a plurality of peripheral jet orifices (17), a ring-shaped seal (21) being interposed between the tubular part (8) and the nozzle head (7) in order to preclude an undesirable water discharge to the exterior of the mouthpiece (6), characterised in that the tubular part (8) has a single tubular-part outlet (23) which communicates with the fluid channel (9) of the tubular part (8) and which is off-centred from the axis of rotation (15) of the nozzle head (7), and in that the nozzle head (7) has only two nozzle-head inlets (24,25), which are off-centred from the axis of rotation (15) of the nozzle head (7) and which are sealed from one another by means of a second ring-shaped seal (26) acting between the tubular part (8) and the nozzle head (7), and of which nozzle-head inlets a first one (24) is in fluid-transmitting communication with the tubular-part outlet (23) in the central-jet position of the nozzle head (7) and the second nozzle-head inlet (25) is in fluid-transmitting communication with the tubular-part outlet (23) in the peripheral-jet position of the nozzle head (7) and the first nozzle-head inlet (24) is in fluid-transmitting communication with the at least one central-jet orifice (16) of the nozzle head (7) and the second nozzle-head inlet (25) with the peripheral-jet orifices (17) of the nozzle head (7).

2. A dental-jet device as claimed in Claim 1, characterised in that the second seal (26) is arranged between surfaces (30, 34) of the tubular part (8) and of the nozzle head (7), which surfaces extend parallel to the axis of rotation (15) of the nozzle head (7), and in that the ring plane (35) of the second seal (26) is inclined relative to the axis of rotation (15) of the nozzle head (7).

3. A mouthpiece (6) for a dental-jet device (1), which mouthpiece (6) comprises a tubular part (8) having a fluid channel (9) and a nozzle head (7) mounted on the tubular part (8) at the location of the free end (10) of said tubular part so as to be rotatable with respect to the tubular part (8) about an axis of rotation (15) between a central-jet position and a peripheral-jet position, which nozzle head has at least one central jet orifice (16) and a plurality of peripheral jet orifices (17), a ring-shaped seal (21) being interposed between the tubular part (8) and the nozzle head (7) in order to preclude an undesirable water discharge to the exterior of the mouthpiece (6), characterised in that the tubular part (8) has a single tubular-part outlet (23) which communicates with the fluid channel (9) of the tubular part (8) and which is off-centred from the axis of rotation (15) of the nozzle head (7), and in that the nozzle head (7) has only two nozzle-head inlets (24,25), which are off-centred from the axis of rotation (15) of the nozzle head (7) and which are sealed from one another by means of a second ring-shaped seal (26) acting between the tubular part (8) and the nozzle head (7), and of which nozzle-head inlets a first one (24) is in fluid-transmitting communication with the tubular-part outlet (23) in the central-jet position of the nozzle head (7) and the second nozzle-head inlet (25) is in fluid-transmitting communication with the tubular-part outlet (23) in the peripheral-jet position of the nozzle head (7) and the first nozzle-head inlet (24) is in fluid-transmitting communication with the at least one central-jet orifice (16) of the nozzle head (7) and the second nozzle-head inlet (25) with the peripheral-jet orifices (17) of the nozzle head (7).

4. A mouthpiece (6) as claimed in Claim 3, characterised in that the second seal (26) is arranged between surfaces (30, 34) of the tubular part (8) and of the nozzle head (7), which surfaces extend parallel to the axis of rotation (15) of the nozzle head (7), and in that the ring plane (35) of the second seal (26) is inclined relative to the axis of rotation (15) of the nozzle head (7).

## Revendications

1. Douchette buccale (1) avec une pièce manuelle (4) et avec au moins une pièce buccale (6) à relier à la pièce manuelle (4) qui présente une pièce tubulaire (8) avec un canal à fluide (9) et une tête à gicleurs (7) fixée dans la région de l'extrémité libre (10) de la pièce tubulaire (8) à celle-ci et susceptible de tourner par rapport à la pièce tubulaire (8) autour d'un axe de rotation (15) entre une position à jet central et une position à jet périphérique, qui présente au moins un gicleur à jet central (16) et plusieurs gicleurs à jet périphérique (17), un joint d'étanchéité circulaire (21) étant prévu entre la pièce tubulaire (8) et la tête à gicleurs (7) en vue d'empêcher la sortie indésirée de fluide vers la face externe de la pièce buccale (6), caractérisée en ce que la pièce tubulaire (8) présente une seule sortie de pièce tubulaire située excentriquement par rapport à l'axe de rotation (15) de la tête à gicleurs (7) et reliée au canal de fluide (9) de la pièce tubulaire (8) et que la tête à gicleurs (7) présente seulement deux inserts de tête à gicleurs (24, 25) disposés excentriquement par rapport à l'axe de rotation (15) de la tête à gicleurs (7) qui sont étanchés l'un par rapport à l'autre à l'aide d'un deuxième joint d'étanchéité circulaire (26) agissant entre la pièce tubulaire (8) et la tête à gicleurs (7) dont un premier insert de la tête à gicleurs (24) se trouve en contact propre au passage de fluide dans la position de jet central de la tête à gicleurs (7) et le deuxième insert de la tête à gicleurs (25) dans la position de jet périphérique de la tête à gicleurs 7 avec la sortie de la pièce tubulaire 23 et le premier insert de la tête à gicleurs (24) est relié de manière à permettre le passage de fluide avec au moins un gicleur à jet central (16) de la tête à gicleurs (7) et le deuxième insert de deux gicleurs (25) avec les gicleurs à jet périphérique (17) de la tête à gicleurs (7).

2. Douchette buccale selon la revendication 1, caractérisée en ce que le deuxième joint d'étanchéité (26) est disposé entre des surfaces (30, 34) de la pièce tubulaire (8) de la tête à gicleurs (7) s'étendant parallèlement à l'axe de rotation (15) de la tête à gicleurs (7) et que le deuxième joint d'étanchéité (26) est disposé avec son plan circulaire (35) incliné par rapport à l'axe de rotation (15) de la tête à gicleurs (7).

3. Pièce buccale (6) pour une douchette buccale (1) qui présente une pièce tubulaire (8) avec un canal à fluide (9) et une tête à gicleurs fixée dans la région de l'extrémité libre (10) de la pièce tubulaire (8) à celle-ci et susceptible de tourner par rapport à la pièce tubulaire (8) autour d'un axe de rotation (15) entre une position à jet central et une position à jet périphérique qui présente au moins un gicleur à jet central (7) et plusieurs gicleurs à jet périphérique, un joint d'étanchéité circulaire (21) étant prévu entre la pièce tubulaire (8) et la tête à gicleurs (7) pour empêcher la sortie indésirée du fluide vers l'extérieur de la pièce buccale (6) caractérisée en ce que la pièce tubulaire (8) présente une seule sortie de pièce tubulaire (23) disposée excentriquement par rapport à l'axe de rotation (15) de la tête à gicleurs (7) et reliée au canal à fluide (9) de la pièce tubulaire (8) et que la tête à gicleurs (7) ne présente que deux inserts de tête à gicleurs (24, 25) disposés excentriquement par rapport à l'axe de rotation (15) de la tête à gicleurs (7) qui sont étanchés l'un par rapport à l'autre à l'aide d'un deuxième joint d'étanchéité circulaire (26) agissant entre la pièce tubulaire (8) et la tête à gicleurs (7) et dont un premier insert de tête à gicleurs (24) se trouve en contact propre au passage de fluide dans la position à jet central de la tête à gicleurs (2) et le deuxième insert de la tête à gicleurs (25) dans la position à jet périphérique de la tête à gicleurs (7) avec la sortie de la pièce tubulaire (23) et le premier insert de tête à gicleurs (24) se trouvant relié pour permettre le passage du fluide avec au moins un gicleur à jet central (16) de la tête à gicleurs (7) et le deuxième insert de tête à gicleurs (25) avec les gicleurs à jet périphérique (17) de la tête à gicleurs (7).

4. Pièce buccale (6) selon la revendication 3, caractérisée en ce que le deuxième joint d'étanchéité (26) est disposé entre des surfaces (30, 34) de la pièce tubulaire (8) et de la tête à gicleurs (7) s'étendant parallèlement à l'axe de rotation (15) de la tête du gicleur (7) et que le deuxième joint d'étanchéité (26) est disposé avec son plan circulaire (35) incliné par rapport à l'axe de rotation (15) de la tête à gicleurs (7).
